# EUROPEAN PATENT APPLICATION

(11) **EP 0 993 897 A2**
(43) Date of publication of application: **19.04.2000**
(21) Application number: 99120555.0
(22) Date of filing: 15.10.1999
(51) Int. Cl.: B23K 20/02, B23K 10/00

(54) **A butt joint structure and an arm member with the butt joint structure**

(30) Priority: 16.10.1998 JP 29543098
(71) Applicant: SHOWA ALUMINUM CORPORATION, Sakaishi, Osaka (JP)
(72) Inventor: Kato, Rentaro, Kasugai-shi, Aichi-ken (JP); Ogawa, Yuichi, Kasugai-shi, Aichi-ken (JP); Uchino, Koji, Kasugai-shi, Aichi-ken (JP); Jyogan, Shigetoshi, Kishiwadashi, Osaka (JP); Yamanoi, Tomoaki, Sakaishi, Osaka (JP)
(74) Representative: Viering, Jentschura & Partner

(57) **Abstract**

A butt joint structure includes two joining members each having a concave portion. The end portions of the joining members are joined with the end surfaces thereof butted each other. A hollow portion is formed at the butted portion of the joining members. In the hollow portion, the core is tightly fitted so as to bridge the two joining members in a state that the core is not joined to the joined portion of the end surfaces of the two joining members. The butted portion of the end surfaces of the two joining members is joined by a friction agitation joining method or a fusion welding method such as a MIG welding. Accordingly, in the butted joint structure, there is almost no root crack at the joined portion. Thus, the butt joint structure has an excellent strength reliability.

## Description

### BACKGROUND OF THE INVENTION

### 1. Field of the Invention

This invention relates to a butt joint structure in which two joining members are joined with an end portion of one of the joining members butted to that of the other joining member, and more particularly, relates to an arm member with the butt joint structure for use as an automobile suspension arm or an engine mount or the like.

### 2. Description of the Related Art

In a case where two metallic joining members each having a concave portion at an end surface thereof are joined with the end surface of one of two joining members butted to that of the other joining member, a hollow portion is formed by the concave portions at the butted portion of the two joining members. Therefore, the butt joint structure having such a hollow portion at the butted portion generally lacks joining strength. Also, the joined portion is deformed easily due to its hollow structure.

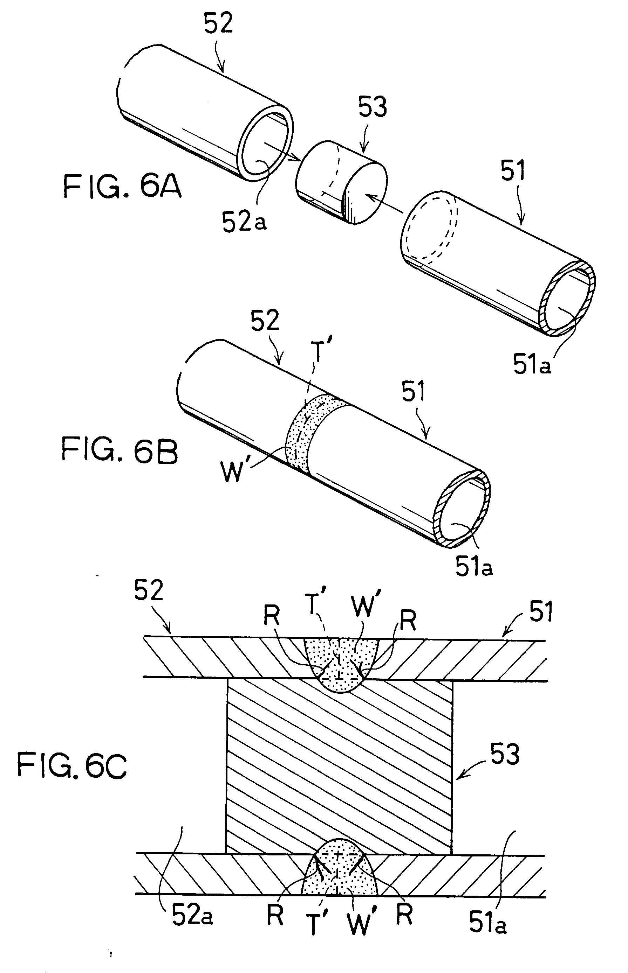

Accordingly, in a conventional butt joint structure, the core is fitted in the hollow portion so as to reinforce the joined portion of the two joining members. One example of this kind of conventional butt joint structure is shown in Figs. 6A to 6C.

As shown in Fig. 6A, the reference numerals 51 and 52 denote joining members each made of a metallic pipe member and having a hollow portion 51a and 52a. Both of the joining members 51 and 52 have the same circular cross-sectional shape having the same size. As shown in Fig. 6A, the reference numeral 53 denotes a solid core made of metal. The core 53 is of a columnar shape, and the outer diameter is the same as the inner diameter of the hollow portion 51a, 52a of each of the joining members 51 and 52.

As shown in Fig. 6A, when the end surfaces of the joining members 51 and 52 are butted each other, the core 53 is fitted into the hollow portions 51a and 52a of the joining members 51 and 52 so that the core 53 bridges the joining members 51 and 52. Then, as shown in Fig. 6B, the butted portion T' of the joining members 51 and 52 are joined to obtain a butt joint member. In Figs. 6B and 6C, the reference letter W' denotes a joined portion, namely, a welded portion, of the end surfaces of the joining members 51 and 52. The joined portion is formed along the whole circumference of the butted portion T'.

In joining the butted portion T', a fusion welding such as a MIG welding (Metal electrode Inert Gas welding) or a TIG welding (Tungsten-Inert-Gas arc welding) was generally employed.

In the aforementioned conventional butt joint structure, however, not only the end portions of the adjacent joining members 51 and 52 are joined each other, but also the core 53 is joined to the joined portion W' of the joining members 51 and 52, as shown in Fig. 6C. This causes root cracks R at the border between the joined portion (welded portion) W' and the outer peripheral surface of the core 53, resulting in a reduced joining strength and a low strength reliability.

### SUMMARY OF THE INVENTION

It is an object of the present invention to provide a butt joint structure with almost no root crack at a joined portion of two joining members and having a high strength reliability. The butt joint structure includes a first joining member having a concave portion at an end surface thereof; a second joining member having a concave portion at an end surface thereof, the second joining member being joined to the first joining member with the end surface of the second joining member butted to the end surface of the first joining member, whereby a hollow portion is formed by the concave portions of the first and second joining members; and a core disposed in the hollow portion so as to bridge the first and second joining members.

Another object of the present invention is to provide an arm member with almost no root crack at a joined portion of a main member and a joint member and having a high strength reliability. The arm member includes the main member made of a hollow member having a hollow inner space; and the joint member having a connecting portion with a concave portion at an end surface thereof, wherein the joint member is joined to the main member with the end surface of the connecting portion butted to an end surface of the main member.

The other objects of the present invention will be apparent in accordance with the following preferred embodiments.

To attain the aforementioned first object, according to a first aspect of the present invention, a butt joint structure includes:
a first joining member having a concave portion at an end surface thereof;
a second joining member having a concave portion at an end surface thereof, the second joining member being joined to the first joining member with the end surface of the second joining member butted to the end surface of the first joining member, whereby a hollow portion is formed by the concave portions of the first and second joining members; and
a core disposed in the hollow portion so as to bridge the first and second joining members,
   wherein the core is tightly fitted in the hollow portion in a state that the core is not joined to a joined portion of the end surfaces of the first and second joining members.

In the aforementioned butt joint structure, since the core is tightly fitted in the hollow portion in a state that the core is not joined to the joined portion of the end surfaces of the first and second joining members, there is almost no root crack at the joined portion. This results in an enhanced joining strength and a high strength reliability. Also, since the core is fitted in the hollow portion so as to bridge the two joining members, the joined portion of the joining members can be reinforced by the core. This enhances the mechanical strength of the joined portion of the two joining members against an external pressure or force. Thus, the joined portion of the two joining members cannot be deformed easily by external pressure or force.

In the aforementioned butt joint structure, it is preferable that the first and second joining members are made of metal and the end surfaces of the first and second joining members are joined by a friction agitation joining method. The friction agitation joining method, one of solid-phase joining methods, generates joining heat less than that in a fusion welding method, which causes less thermal fatigue at the joined portion. Thus, the aforementioned joint structure has almost no thermal fatigue, therefore, the joining strength can be extremely high and a reliable joint structure can be obtained.

In the aforementioned butt joint structure, the first and second joining members may be made of metal and that the end surfaces of the first and second joining members may be joined by a fusion welding.

The core may be a solid member, i.e., a solid core. In cases where the butted portions of the two joining members are joined by a friction agitation joining method, it is recommended to use the aforementioned solid core because of the following reasons. Generally, in a friction agitation joining method using a joining tool having a rotor with an probe, the core receives an insertion pressure of the rotating probe and a pressing force of the end surface of the rotor. However, since the solid core dose not deform due to such an insertion pressure of the probe and/or a pressing force of the end surface of the rotor, the core can firmly support the end portions of the two joining members.

However, in the aforementioned butt joint structure, the core may be a hollow member, i.e., a hollow core, for the purpose of lightening the weight of the product with the butt joint structure. The hollow core may have a reinforcing partition therein. This also lightens the weight of the product with the butt joint structure. In cases where the butted portions of the two joining members are joined by a friction agitation joining method, it is preferable to use the hollow core with a reinforcing partition therein because of the following reasons. Since the core is reinforced by the reinforcing partition provided in the hollow portion thereof, the core has high strength. Thus, a deformation of the core can be effectively prevented even if the insertion pressure of the probe and/or the pressing force of the end surface of the rotor are applied to the butted portion of the joining members. Therefore, the end portions of the two joining members can be firmly supported by the core.

In the aforementioned butt joint structure, it is preferable that the core is made of material having flow stress larger than that of the first and second joining members at a temperature of joining the end surfaces of the first and second joining members. According to this core, since the deformation of the core due to joining heat can be prevented, the end portions of the two joining members can be firmly supported by the core. In a case where the butted portions of the two joining members are joined by a friction agitation joining method, it is preferable to use the core having the aforementioned flow stress. Since this can prevent the core from being deformed due to the insertion pressure of the probe, the pressing force of the end surface of the rotor and the joining heat, the end portions of the two joining members can be firmly supported by the core.

In the aforementioned butt joint structure, it is preferable that the first and second joining members, as well as the core, are made of aluminum or aluminum alloy. This lightens the weight of the butt joint structure.

In the aforementioned butt joint structure, it is preferable that the core has a contact surface to which the first and second joining members contact and that the contact surface is given a surface treatment so that the core becomes hard to join to the joined portion of the first and second joining members. This can surely prevent the core from being joined to the joined portion of the two joining members.

In the aforementioned butt joint structure, it is preferable that the first and second joining members as well as the core are made of aluminum or aluminum alloy and that the core is provided with an alumite film or a chromate film forming a contact surface thereof to which the first and second joining members contact. This also can surely prevent the core from being joined to the joined portion of the two joining members, and can lighten the weight of the butt joint structure.

In the aforementioned butt joint structure, it is preferable that the core is made of material which hardly joins to the joined portion of the first and second joining members. This also can surely prevent the core from being joined to the joined portion of the two joining members.

In the aforementioned butt joint structure, it is preferable that the first and second joining members are made of aluminum or aluminum alloy and that the core is made of iron, stainless steel or ceramic. This also can surely prevent the core from being joined to the joined portion of the two joining members.

To attain the aforementioned second object, according to another aspect of the present invention, an arm member includes:
a main member made of a hollow member having a hollow inner space; and
a joint member having a connecting portion with a concave portion at an end surface of the connecting portion, wherein the joint member is joined to the main member with the end surface of the connecting portion butted to an end surface of the main member, whereby a hollow portion is formed by the concave portion and the hollow inner space; and
a core disposed in the hollow portion so as to bridge the main member and the connecting portion of the joint member,
   wherein the core is tightly fitted in the hollow portion in a state that the core is not joined to a joined portion of the end surfaces of the main member and the joint member.

In the aforementioned arm member, since the core is tightly fitted in the hollow portion in a state that the core is not joined to a joined portion of the end surfaces of the main member and the joint member, there is almost no root crack at the joined portion. Thus, the arm member has an enhanced joining strength and a high strength reliability. Also, since the core is fitted in the hollow portion so as to bridge the main member and the joint member, the joined end portions of the main member and the joint member are reinforced by the core, resulting in an enhanced strength of the joined end portions of the main member and the joint member against external pressure or force. Thus, the joined end portions of the main member and the joint member cannot be deformed easily by external pressure or force. Furthermore, since the main member is made of a hollow member, the arm member can be light in weight.

In the aforementioned arm member, it is preferable that the main member and the connecting member are made of metal and that the end surfaces of the main member and the joint member are joined by a friction agitation joining method. In this arm member, there is almost no thermal fatigue at the joined portion. Thus, the joining strength of the joined portion can be extremely high and a reliable joining can be obtained.

In the aforementioned arm member, the main member and the joint member may be made of metal and that the end surfaces of the main member and the joint member may be joined by a fusion welding.

### BRIEF DESCRIPTION OF DRAWINGS

The above and other objects, features, and advantages of the present invention will be apparent from the following detailed description of the preferred embodiments with reference to the attached drawings, wherein:
Fig. 1 is a perspective view of a butt joint structure (an arm member) according to an embodiment of the present invention;
Fig. 2 is a perspective exploded view of the joining portion of the aforementioned butt joint structure (the arm member);
Fig. 3A is a cross-sectional view of the joining portion of the aforementioned butt joint structure before joining;
Fig. 3B is a cross-sectional view showing the joining portion of the aforementioned butt joint structure during joining;
Fig. 4 is an enlarged cross-sectional view of the joined portion of the aforementioned butt joint structure (the arm member);
Fig. 5A is a perspective view showing a first modification of a core;
Fig. 5B is a cross-sectional view of the core shown in Fig.
Fig. 5C is a perspective view showing a second modification of a core;
Fig. 5D is a cross-sectional view of the core shown in Fig. 5c;
Fig. 6A is a perspective exploded view of a conventional butt joint structure;
Fig. 6B is a perspective view of the conventional butt joint structure in a butt joint state; and
Fig. 6C is an enlarged cross-sectional view of the joined portion thereof.

### DETAILED DESCRIPTION OF THE PREFERRED EMBODIMENTS

A butt joint structure according to the embodiments of the present invention will be explained with reference to the attached drawings.

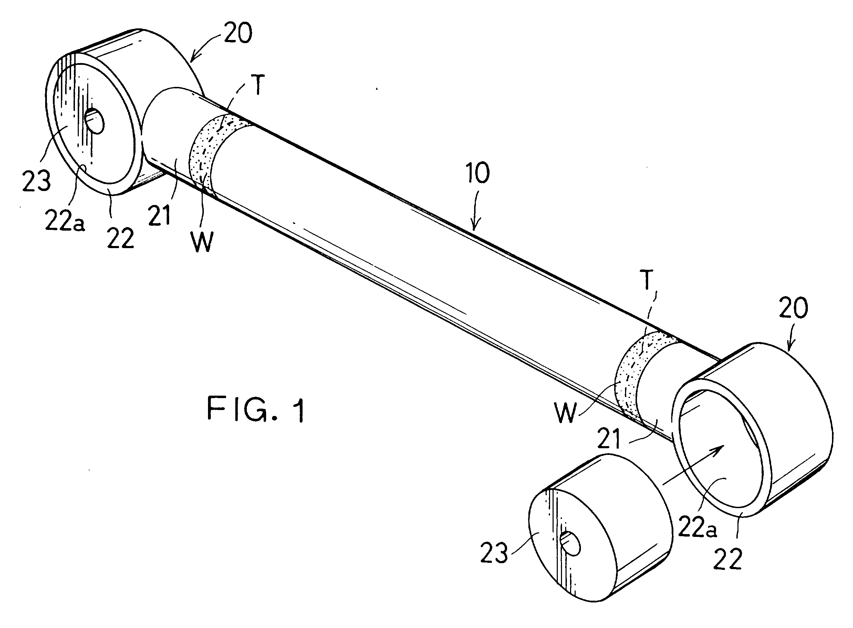

The butt joint structure according to the embodiment, as shown in Figs. 1 to 4, is applied to an arm member for use as an automobile suspension arm.

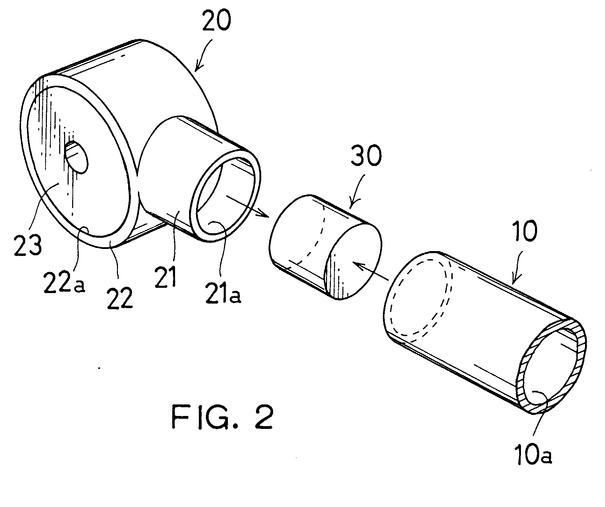

As shown in Fig. 1, the reference numeral 10 denotes a first joining member, or a main member. The first joining member 10 is made of a hollow member, or a pipe member, having a hollow portion 10a as shown in Fig. 2. The first joining member 10 has a circular cross-sectional shape and is made of aluminum or aluminum alloy. In this embodiment, the first joining member 10 is made of JIS (Japanese Industrial Standard) A6061-T1 aluminum alloy.

As shown in Fig. 1, the reference numeral 20 denotes a second joining member, or a joint member. The second joining member 20 includes a generally cylindrical bushing mounting portion 22 for mounting a cylindrical vibroisolating bushing 23 with an elastic rubber portion and a columnar connecting portion 21 integrally protruded from the outer peripheral surface of the bushing mounting portion 22. The bushing mounting portion 22 has a bushing mounting opening 22a of a circular cross-sectional shape. The bushing 23 is press-fitted into the bushing mounting opening 22a.

The second joining member 20 is made of aluminum or aluminum alloy. In this embodiment, the second joining member 20 is made of JIS A6061-T6 aluminum alloy.

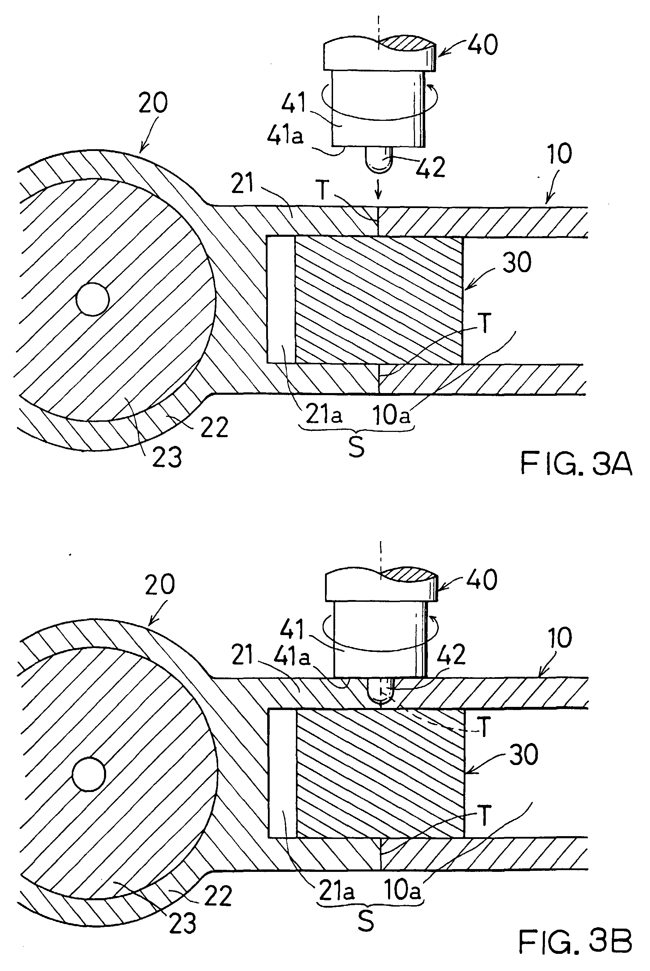

As shown in Fig. 2, in the central portion of the end surface of the connecting portion 21 of the second joining member 20, a concave portion 21a of a circular cross-sectional shape is formed. The outer diameter of the connecting portion 21 is the same as that of the end portion of the first joining member 10. Also, the inner diameter of the connecting portion 21, namely, the concave portion 21a, is the same as that of the end portion of the first joining member 10, namely, the hollow portion 10a. Accordingly, as shown in Fig. 3A, in a state that the end surface of the first joining member 10 is coaxially butted to that of the connecting portion 21 of the second joining member 20, the inner and outer peripheral surfaces of the first joining member 10 coincide with those of the connecting portion 21 of the second joining member 20, respectively. In this butted state, a hollow portion S is formed by the hollow portion 10a of the first joining member 10 and the concave portion 21a of the connecting portion 21 of the second joining member 20.

In Fig. 2, the reference numeral 30 denotes a core. The core 30 is a solid member of a columnar shape. The core 30 is made of aluminum or aluminum alloy having flow stress larger than that of the first joining member 10 and the second joining member 20 at the joining temperature of 500°C when the butted portion T of the end surface of the first joining member 10 and the end surface of the connecting portion 21 of the second joining member 20 is joined by a friction agitation joining method. In this embodiment, the core is made of JIS A5083 aluminum alloy.

The core 30 is formed to have an outer diameter slightly larger than the inner diameter of the hollow portion 10a of the first joining member 10 as well as the inner diameter of the concave portion 21a of the connecting portion 21 of the second joining member 20. Therefore, the core 30 can be forcibly fitted into the hollow portion S formed at the butted portion.

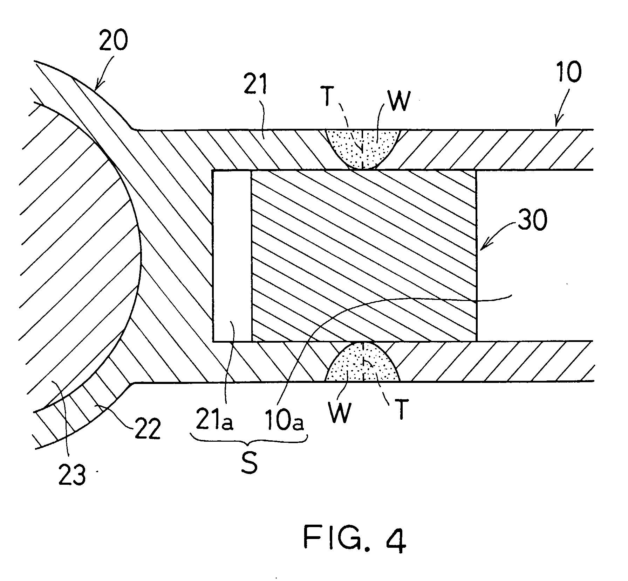

Fig. 4 illustrates a cross-sectional view of the butt joint structure according to this embodiment. As shown in Fig. 4, the first joining member 10 is joined by a friction agitation joining method, one of the solid joining methods, to the second joining member 20 with the end surface of the first joining member 10 butted to the end surface of the connecting portion 21 of the second joining member 20. The reference letter W denotes a joined portion, namely, a welded portion, of the end surface of the first joining member 10 and the end surface of the connecting portion 21 of the second joining member 20. The joined portion W is formed along the whole circumference of the butted portion T.

The core 30 is tightly fitted in the hollow portion S formed at the butted portion so as to bridge the first joining member 10 and the connecting portion 21 of the second joining member 20. In this state, the outer peripheral surface of the core 30 is press-contacted to the inner peripheral surfaces of the hollow portion 10a of the first joining member 10 and the concave portion 21a of the second joining member 20 in a face-to-face contact manner. In other words, the core 30 is forcibly fitted into the hollow portion S. Although the core 30 is not joined, or welded, to the joined (welded) portion W of the end surface of the first joining member 10 and the end surface of the connecting portion 21 of the second joining member 20, the core 30 is immovably fixed to the first and second joining members 10 and 20 by press-fitting to the inner peripheral surfaces of the hollow portion 10a of the first joining member 10 and the concave portion 21a of the second joining member 20. In other words, although the first joining member 10 is joined to the second joining member 20 at their end surfaces by a friction agitation joining method, the core 30 is tightly fitted in the hollow portion S in a state that the core 30 is not joined, or not welded, to the joined portion W of the first and second joining members 10 and 20.

The aforementioned butt joint is obtained as follows.

As shown in Fig. 2, when the end surface of the first joining member 10 is butted to that of the connecting portion 21 of the second joining member 20, one end portion of the core 30 is press-fitted into the hollow portion 10a of the first joining member 10 and the other end portion of the core 30 is press-fitted into the concave portion 21a of the connecting portion 21 of the second joining member 20. Thus, the core 30 is fitted in the hollow portion S formed at the butted portion T so as to bridge the first joining member 10 and the connecting portion 21 of the second joining member 20.

Next, the butted portion T is joined, or welded, by a friction agitation joining method.

The friction agitation joining method will be explained as follows. In Fig. 3A, the reference numeral 40 denotes a joining device used for a friction agitation joining method. The joining device 40 is provided with a column-shaped rotor 41 having a larger diameter and a pin-shaped probe 42 having a smaller diameter. The probe 42 is integrally protruded along the axis of an end surface 41a of the rotor 41. The rotor 41 and the probe 42 are made of heat resisting material which is harder than that of the first and second joining members 10 and 20 and endurable against friction heat. On a surface of the probe 42, a screw-shaped convex portion (not shown) for agitating the material is formed.

With the joining device 40, the probe 42 is inserted into the outer surface of the butted portion T while rotating the rotor 41 with the probe 42. As shown in Fig. 3B, the probe 42 is inserted into the butted portion T until the tip end of the probe 42 reaches a portion near the inner surface of the butted portion T so as not to exceed the thickness of the butted portion T. In this step, the tip end of the probe 42 should not be inserted into the core 30. It is preferable that the end surface 41a of the rotor 41 is pressed onto the outer surface of the butted portion T so that more friction heat can be generated. Then, the probe 42 is moved along the circumference of the butted portion T while being inserted in the butted portion T.

At a portion of the first and second joining members 10 and 20 to which the probe 42 contacts, the material of the first and second joining members 10 and 20 will be softened by the friction heat generated due to the rotation of the probe 42, and the friction head generated due to the contact of the end surface 41a of the rotor 41 and the butted portion T. Also, the softened portion will be agitated by the rotation of the probe 42. In accordance with the movement of the probe 42, the softened and agitated material is plastically fluidized to go around the probe 42 and to fill up a groove formed behind the probe 42. Then, the material will be cooled and solidified by the immediate loss of the friction heat. This phenomenon will be repeated with the advancing movement of the probe 42, resulting in an integral joining of the butted portion T along the entire circumference thereof. Thus, the first and second joining members 10 and 20 are joined.

This friction agitation joining method has advantages in that the material of the first and second joining members 10 and 20 is not limited to a specific kind of material and the deformation of the first and second joining members 10 and 20 caused by heat stress is hardly occurred because the friction agitation joining method is one of solid-phase joining methods.

Accordingly, the butt joint member shown in Fig. 4 can be obtained. In this butted joint structure, since the core 30 is press-fitted in the hollow portion S in a state that the core 30 is press-contacted to the inner surface of the first joining member 10 and the inner surface of the connecting portion 21 of the second joining member 20 in a face-to-face contact so as to bridge the first joining member 10 and the connecting portion 21 of the second joining member 20, the joined portion of the first and second joining members 10 and 20 is extremely strong against an external pressure or force.

Furthermore, in cases where the first and second joining members 10 and 20 are made of aluminum or aluminum alloy and the joining temperature for joining the butted portion T by a friction agitation joining method is approximately 500°C, since the core 30 is made of aluminum or aluminum alloy having flow stress larger than that of the first and second joining members 10 and 20 at a temperature of 500°C, the core 30 will not be deformed by a friction heat during the friction agitation joining. Therefore, the joined portion of the first and second joining members 10 and 20 can be firmly supported by the core 30.

Furthermore, since the core 30 is not joined, or not welded, to the joined portion W, there is no root crack at the joined portion W. Thus, the joining strength of the butted portion W is high. Therefore, the arm member having the butt joining structure has a high strength reliability. In addition, since the first and second joining members 10 and 20 and the core 30 are made of aluminum or aluminum alloy, the arm member is light in weight. Also, since the first joining member 10 is made of a hollow member, or a pipe member, the arm member is extremely light in weight.

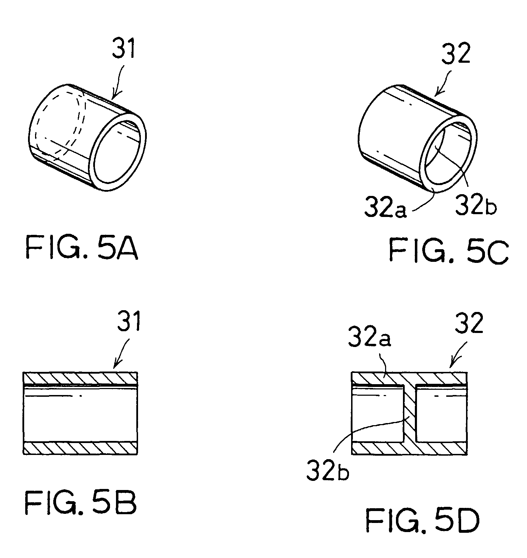

Figs. 5A to 5D show two modifications of the core 30. The core 31 shown in Figs. 5A and 5B is a hollow member having a hollow portion. The core 32 shown in Figs. 5C and 5D is a hollow member having a cylindrical portion 32a with a hollow space and a reinforcing partition 32b provided therein for partitioning the hollow space. The partition 32b is provided generally perpendicularly to the axial direction of the cylindrical portion 32a.

Both the cores 31 and 32 are made of aluminum or aluminum alloy having flow stress larger than that of the first and second joining members 10 and 20 at a temperature of 500°C. In detail, they are made of JIS A5083 aluminum alloy. Both the cores 31 and 32 are to be fitted in the hollow portion S in a state that the outer surface of thereof is press-fitted to the inner surface of the hollow portion 10a and the inner surface of the concave portion 21a of the second joining member 20 in a face-to-face manner.

Since both the cores 31 and 32 are hollow members made of aluminum or aluminum alloy, the obtained but joint product can be further light.

In cases where the friction agitation joining method is employed, since the insertion pressure of the probe 42 and/or the pressing force of the end surface 41a of the rotor 41 are applied to the core during the joining process, it is preferable to use the solid core 30 or the core 32 having a reinforcing partition 32b. This can prevent the deformation of the core 30 or 32 due to the insertion pressure of the probe 42 and/or the pressing force of the end surface 41a of the rotor 41. Thus, the end portions of the joining members can be firmly supported by the core 30 or 32.

In the aforementioned embodiment, the butted portion T of the end surface of the first joining member 10 and the end surface of the connecting portion 21 of the second joining member 20 is joined by the friction agitation joining method, however, the butted portion T may be joined by a fusion welding such as a TIG welding or a MIG welding. In cases where the butted portion T is joined by a fusion welding, it is preferable that the core 30, 31 or 32 is made of material which is hard to join to the joined portion W. For example, in a case where the first and second joining members 10 and 20 are made of aluminum or aluminum alloy, it is preferable that the core 30, 31 or 32 is made of iron, stainless steel or ceramics. This can surely prevent the core 30, 31 or 32 from being joined to the joined portion W.

Also, a surface treatment may be applied to the outer surface of the core 30, 31 or 32 so that the core is hard to join to the joined portion W. For example, in cases where both of the first and second joining members 10 and 20 are made of aluminum or aluminum alloy, it is preferable that an alumite film or a chromate film is formed on the outer surface of the core 30, 31 or 32. This can surely prevent the core 30, 31 or 32 from being joined to the joined portion W. Furthermore, since the core 30, 31 or 32 is made of aluminum or aluminum alloy, the product with the butt joint structure can be light in weight.

The present invention is not limited to the aforementioned embodiments. Various modifications can be employed.

For example, in the aforementioned embodiment, a beveling shape of the end surface of the first joining member 10 and the connecting portion 21 of the second joining member 20 is an I-shape, however, in the present invention, a beveling shape of the end surface of the first joining member 10 and the connecting portion 21 of the second joining member 20 may be a U-shape, a V-shape, or a J-shape.

Furthermore, in the aforementioned embodiment, the second joining member 20 is a joint member provided with the bushing mounting portion 22 and the connecting portion 21, however, in the present invention, the second joining member 20 may be a joint member provided with a ball joint mounting portion (not shown) for mounting a ball joint and a connecting portion, or may be a joint member provided with a channel-shaped yoke portion (not shown) and a connecting portion.

The butt joint structure according to the present invention can be applied not only to an arm member but also to various structures. The joining member may be made of a pipe member having a polygon cross-sectional shape, or may be a hollow panel member.

### 〈EXAMPLES〉

Examples of the present invention will be explained as follows.

In the example, the arm member with the butt joint structure shown in the aforementioned embodiment was manufactured.

The first joining members 10 used in the examples 1 to 3 and the comparative example 1 were made of JIS A6061-T6 aluminum alloy, and had an outer diameter of 30 mm and a thickness of 3 mm. The second joining member 20 was made of JIS A6061-T6 aluminum alloy, and an outer diameter of the connecting portion 21 was 30 mm and a thickness of the connecting portion was 3 mm.

### 〈Example 1〉

The butted portion T of the end surfaces of the first and second joining members 10 and 20 was joined by a friction agitation joining method. The core 30, which was a columnar solid member made of JIS A5083 aluminum alloy, was used.

### 〈Example 2〉

The butted portion T of the end surfaces of the first and second joining members 10 and 20 was joined by a MIG welding. The core 31, which was a hollow member shown in Fig. 5A and made of iron, was used.

### 〈Example 3〉

The butted portion T of the end surfaces of the first and second joining members 10 and 20 was joined by a MIG welding. The core 31, which was a hollow member shown in Fig. 5A, made of JIS A6061-T6 aluminum alloy and provided with an alumite film on the outer surface, was used.

### 〈Comparative example 1〉

The butted portion T of the end surfaces of the first and second joining members 10 and 20 was joined by a MIG welding. The core 30, which was a columnar solid member made of JIS A6061-T6 aluminum alloy, was used. The core 30 was joined to the joined portion W of the end surfaces of the first and second joining members 10 and 20.

In the butt joint structures, the tensile strength σ_{B} (N/mm²) of each of the examples 1 to 3 and the comparative example 1 was measured. The results are shown in Table 1.

**Table 1**

| | Joining Method | Tensile Strength σ_{B} (N/mm²) |
|---|---|---|
| Example 1 | Friction agitation joining method | 240 |
| Example 2 | MIG | 230 |
| Example 3 | MIG | 230 |
| Comparative Example 1 | MIG | 170 |

As shown in Table 1, each of the butt joint structures according to the examples 1 to 3 has a tensile strength σ_{B} larger than that in the butt joint structure according to the comparative example 1. Thus, the but joint structure according to the present invention has a high strength reliability. The butt joint structure of the example 1 has a tensile strength σ_{B} much larger than that in the butt joint structure of the examples 1 and 2, and has an extremely high strength reliability.

Furthermore, in the butt joint structures of the examples 1 to 3 and the comparative example 1, the joining condition was examined by naked eyes. The examination revealed that many small root cracks were found at the joined portion W of the comparative example 1, however, no root crack was found at the joined portions W of the examples 1 to 3. Thus, the examination revealed that the joined member according to the examples 1 to 3 had a good joining condition.

As mentioned in the above, according to the present invention, a butt joint structure includes:
a first joining member having a concave portion at an end surface thereof;
a second joining member having a concave portion at an end surface thereof, the second joining member being joined to the first joining member with the end surface of the second joining member butted to the end surface of the first joining member, whereby a hollow portion is formed by the concave portions of the first and second joining members; and
a core disposed in the hollow portion so as to bridge the first and second joining members,
   wherein the core is tightly fitted in the hollow portion in a state that the core is not joined to a joined portion of the end surfaces of the first and second joining members.

Accordingly, in the butt joint structure, since the joined portion of the joining members is reinforced by the core, the joined portion of the joining members has a strong structure against external pressure or force. This can prevent the joined portion of the joining members from being deformed by external pressure or force. Furthermore, since the core is tightly fitted in the hollow portion in a state that the core is not joined to the joined portion of the end surfaces of the joining members, there is almost no root crack at the joined portion, resulting in an enhanced joining strength and a high strength reliability.

In cases where the first and second joining members are made of metal and the end surfaces of the first and second joining members are joined by a friction agitation joining method, the aforementioned joint structure has almost no thermal fatigue, therefore, the joining strength can be extremely high and a reliable joint structure can be obtained.

In cases where the core is a solid member, the core can firmly support the end portions of the two joining members at the time of joining.

In cases where the core is a hollow member, this lightens the weight of the product with the butt joint structure.

In cases where the core is a hollow member having a reinforcing partition therein, this also lightens the weight of the product with the butt joint structure and the core can firmly support the joined end surface of the joining members.

In cases where the core is made of material having flow stress larger than that of the first and second joining members at a temperature of joining the end surfaces of the first and second joining members, the deformation of the core due to joining heat can be prevented, resulting in a firmly supported end portions of the two joining members.

In cases where the first and second joining members are made of aluminum or aluminum alloy and the core is made of aluminum or aluminum alloy, this lightens the weight of the product with the butt joint structure.

In cases where the core has a contact surface to which the first and second joining members contact and the contact surface is given a surface treatment so that the core is hard to join to the joined portion of the first and second joining members, this can surely prevent the core from being joined to the joined portion of the two joining members.

In cases where the first and second joining members are made of aluminum or aluminum alloy, the core is made of aluminum or aluminum alloy, and the core is provided with an alumite film or a chromate film forming a contact surface of the core to which the first and second joining members contact, this also can surely prevent the core from being joined to the joined portion of the two joining members, and can lighten the weight of the butt joint structure.

In cases where the core is made of material which is hard to join to the joined portion of the first and second joining members, this also can surely prevent the core from being joined to the joined portion of the two joining members.

In cases where the first and second joining members are made of aluminum or aluminum alloy and the core is made of iron, stainless steel or ceramic, this also can surely prevent the core from being joined to the connected portion of the two joining members.

According to another aspect of the present invention, an arm member includes:
a main member made of a hollow member having a hollow inner space; and
a joint member having a connecting portion with a concave portion on an end surface of the connecting portion, wherein the joint member is joined to the main member with the end surface of the connecting portion butted to an end surface of the main member, whereby a hollow portion is formed by the concave portion and the hollow inner space; and
a core disposed in the hollow portion so as to bridge the main member and the joint member, wherein the core is tightly fitted in the hollow portion in a state that the core is not joined to a joined portion of the end surfaces of the main member and the joint member.

In the aforementioned arm member, the joined portion is reinforced by the core to have a strong structure against external pressure or force. This can prevent the joined portion from being deformed by external pressure or force. Furthermore, since the core is tightly fitted in the hollow portion in a state that the core is not joined to the joined portion, there is almost not root crack at the joined portion, resulting in an enhanced joining strength and a high strength reliability. Furthermore, since the main body is made of a hollow member, the arm member can be light in weight.

In cases where the main member and the joint member are made of metal and they are joined by a friction agitation joining method, there is almost no thermal fatigue at the joined portion, resulting in a high joining strength and reliable joining condition.

The present invention claims a priority based on Japanese Patent Application No. H10-295430 filed on October 16, 1998, the content of which is incorporated hereinto by reference in its entirety.

The terms and descriptions in this specification are used only for explanatory purposes and the present invention is not limited to these, but many modifications and substitutions may be made without departing from the spirit of the scope of the present invention which is defined by the appended claims.

## Claims

1. A butt joint structure, comprising:
a first joining member having a concave portion at an end surface thereof;
a second joining member having a concave portion at an end surface thereof, said second joining member being joined to said first joining member with said end surface of said second joining member butted to said end surface of said first joining member, whereby a hollow portion is formed by said concave portions of said first and second joining members; and
a core disposed in said hollow portion so as to bridge said first and second joining members,
wherein said core is tightly fitted in said hollow portion in a state that said core is not joined to a joined portion of said end surfaces of said first and second joining members.

2. The butt joint structure as recited in claim 1, wherein said first and second joining members are made of metal, and wherein said end surfaces of said first and second joining members are joined by a friction agitation joining method.

3. The butt joint structure as recited in claim 1, wherein said first and second joining members are made of metal, and wherein said end surfaces of said first and second joining members are joined by a fusion welding method.

4. The butt joint structure as recited in claim 2 or 3, wherein said core is a solid member.

5. The butt joint structure as recited in claim 2 or 3, wherein said core is a hollow member.

6. The butt joint structure as recited in claim 2 or 3, wherein said core is a hollow member having a reinforcing partition therein.

7. The butt joint structure as recited in claim 2 or 3, wherein said core is made of material having flow stress larger than that of said first and second joining members at a temperature of joining said end surfaces of said first and second joining members.

8. The butt joint structure as recited in claim 2 or 3, wherein said first and second joining members are made of aluminum or aluminum alloy, and wherein said core is made of aluminum or aluminum alloy.

9. The butt joint structure as recited in claim 2 or 3, wherein said core has a contact surface to which said first and second joining members contact, and wherein said contact surface is given a surface treatment so that said core is hard to join to said joined portion of said first and second joining members.

10. The butt joint structure as recited in claim 2 or 3, wherein said first and second joining members are made of aluminum or aluminum alloy, wherein said core is made of aluminum or aluminum alloy, and wherein said core is provided with an alumite film or a chromate film forming a contact surface of said core to which said first and second joining members contact.

11. The butt joint structure as recited in claim 2 or 3, wherein said core is made of material which is hard to join to said joined portion of said first and second joining members.

12. The butt joint structure as recited in claim 2 or 3, wherein said first and second joining members are made of aluminum or aluminum alloy, and wherein said core is made of iron, stainless steel or ceramic.

13. An arm member, comprising:
a main member made of a hollow member having a hollow inner space;
a joint member having a connecting portion with a concave portion at an end surface of said connecting portion, wherein said joint member is joined to said main member with said end surface of said connecting portion butted to an end surface of said main member, whereby a hollow portion is formed by said concave portion and said hollow inner space; and
a core disposed in said hollow portion so as to bridge said main member and said joint member,
wherein said core is tightly fitted in said hollow portion in a state that said core is not joined to a joined portion of said end surfaces of said main member and said joint member.

14. The arm member as recited in claim 13, wherein said main member and said joint member are made of metal, and wherein said end surfaces of said main member and said joint member are joined by a friction agitation joining method.

15. The arm member as recited in claim 13, wherein said main member and said joint member are made of metal, and wherein said end surfaces of said main member and said joint member are joined by a fusion welding method.
